# EUROPÄISCHE PATENTSCHRIFT

(11) **EP 1 667 875 B1**
(45) Veröffentlichungstag und Bekanntmachung des Hinweises auf die Patenterteilung: **27.02.2008**
(21) Anmeldenummer: 04738667.7
(22) Anmeldetag: 11.06.2004
(51) Int. Cl.: B60R 16/02, H02H 9/04, H02H 11/00, H02M 7/06

(54) **SCHALTUNGSANORDNUNG MIT VERPOLSCHUTZ FÜR EIN KRAFTFAHRZEUG**
POLARIZED CIRCUIT ARRANGEMENT FOR A MOTOR VEHICLE
CIRCUITERIE A PROTECTION CONTRE L'INVERSION DE POLARITE POUR UN VEHICULE AUTOMOBILE

(30) Priorität: 24.09.2003 DE 10344182
(43) Veröffentlichungstag der Anmeldung: 14.06.2006
(73) Patentinhaber: ROBERT BOSCH GMBH, 70442 Stuttgart (DE)
(72) Erfinder: KAHLES, Patric, 77876 Kappelrodeck (DE); KOCH, Stefan, 77815 Buehl (DE)
(86) Internationale Anmeldenummer: PCT/DE2004/001215
(87) Internationale Veröffentlichungsnummer: WO 2005/039935

(56) Entgegenhaltungen:
- EP-A- 0 391 065
- EP-A- 0 626 745
- EP-A- 0 708 515
- US-A- 4 710 685
- US-A- 5 719 734

## Beschreibung

Die Erfindung betrifft eine Antriebsvorrichtung mit einem Verpolschutz für einen Gebläsemotor eines Kraftfahrzeugs gemäß dem unabhängigen Anspruch 1.

In der Fahrzeugtechnik werden heute viele Funktionen mittels elektrischer Schaltungen bereitgestellt, wobei diese Schaltungen regelmäßig Halbleiter in diskreter oder integrierter Bauform aufweisen. Die elektrischen Schaltungen werden zumindest zeitweise aus dem Akkumulator des Fahrzeugs mit Energie versorgt. Bekanntermaßen kann der Akkumulator eines Fahrzeugs bei Wartungs- oder Reparaturarbeiten ausgetauscht werden, wobei beim erneuten Anschließen des Akkumulators jedes Anschlusskabel mit dem technisch vorgeschriebenen Pol verbunden werden muss. Falls in einem Fehlerfall das negative Anschlusskabel mit dem positiven Pol des Akkumulators und das positive Anschlusskabel mit dem negativen Pol des Akkumulators in Verbindung kommt, wird dies als Verpolung bezeichnet (Verpolfall). Werden die vom Akkumulator versorgten elektrischen Schaltungen nun mit einer verpolten Spannung betrieben, so kann dies zur Fehlfunktion und/oder Zerstörung von Schaltungen führen. Um insbesondere den Fall einer Zerstörung zu verhindern, ist es aus dem Stand der Technik bekannt, einen Verpolschutz einzusetzen. Dieser Verpolschutz wird zum Beispiel als Diode oder als zu einer Diodenfunktion beschalteter Transistor ausgeführt und verhindert, dass ein Strom in falscher Richtung in die Schaltung fließt.

Üblicherweise werden die genannten Schaltungen zudem gegen Überspannungen geschützt, die beim Betrieb des Fahrzeugs auftreten können: Wenn der Motor des Fahrzeugs in Betrieb ist, wird das elektrische Netzwerk des Fahrzeugs, einschließlich der Batterie des Fahrzeugs und der genannten Schaltungen, üblicherweise von einem dem Motor zugeordneten Generator (zum Beispiel einer Lichtmaschine) mit Energie versorgt. Wird eine elektrische Last aus dem genannten Netzwerk ausgekoppelt, zum Beispiel durch Abschaltung oder in einem Fehlerfall, wenn die Batterie oder eine Batterieleitung plötzlich hochohmig wird, so entsteht kurzfristig eine Spannungsüberhöhung im elektrischen Netzwerk, die Schaltungen beschädigen oder zerstören kann. Um dies zu verhindern, ist es bekannt, einen Überspannungsschutz zu verwenden. Dieser Überspannungsschutz wird üblicherweise mit einer Zenerdiode realisiert, die der zu schützenden Schaltung parallel geschaltet wird. Bleibt die Versorgungsspannung der elektronischen Schaltung unterhalb der Durchbruchsspannung der Zenerdiode, so sperrt die Diode und der von der Versorgungsspannung bewirkte Energiefluss steht in seiner Gesamtheit der Schaltung zur Verfügung. Wird die Durchbruchsspannung der Zenerdiode überschritten, so wird die Diode niederohmig und leitet einen Teil der von der Versorgungsspannung bewirkten Energie an der elektronischen Schaltung vorbei. Damit wird der Schutz der Schaltung bewirkt.

Aus der gattungsbildenden EP 0 391 065 A1 ist beispielsweise eine Schaltungsanordnung zur Erhöhung der Versorgungsspannung für während der Anlassphase oder Betriebsphase einer Brennkraftmaschiene eines Kraftfahrzeugs oder dergleichen zu betreibende Geräte, insbesondere Steuergeräte für Zünd- und/oder Einspritzanlagen, mit einer zwischen der Versorgungsspannung der Batteriespannung liegenden Verpolschutzdiode bekannt, wobei eine Zenerdiode einen Überspannungsableiter für die Versorungsspannungsebene bildet. Die Verpolschutzdiode ist so geschaltet, dass ihre Anode an der Batteriespannung und ihre Kathode an der Versorgungsspannung liegt, während die Zenerdiode hinsichtlich die Versorgungsspannung in Sperrichtung geschaltet ist.

Eine Zenerdiode weist in ihrer Sperrrichtung eine andere Charakteristik auf als in ihrer Durchlassrichtung. Dies bedeutet insbesondere, dass die Diode in ihrem Durchlassbereich bei einer - betragsmäßig gesehen - deutlich geringeren Spannung niederohmig wird als in ihrem Sperrbereich. Für den genannten Verpolfall bedeutet dies, dass die Diode nicht in der vorgesehenen Sperrrichtung, sondern in Durchlassrichtung betrieben wird und daher von einem sehr großen Strom durchflossen wird, der schnell zur Zerstörung der Diode führen kann. Daher muss auch diese Zenerdiode mit einer Schutzvorrichtung gegen eine Verpolung der Versorgungsspannung versehen werden. Dazu wird gemäß dem Stand der Technik eine weitere Diode in entgegengesetzter Richtung zur ersten Diode in Reihe geschaltet.

Erfindungsgemäß weist die Antriebsvorrichtung für einen Gebläsemotor eines Kraftfahzeugs neben einer pulsweitenmodulierenden Motorsteuerung, einer Freilaufdiode und einer Schaltungsanordnung einen die Hauptfunktion der Schaltung bewirkenden Funktionalbereich, einen den Funktionalbereich vor einer Verpolung der Versorgungsspannung schützenden Verpolschutz, eine mindestens einen Teil des Funktionalbereichs vor einer Überspannung schützende Zenerdiode und eine die Zenerdiode vor einer Verpolung der Versorgungsspannung schützende Schutzvorrichtung auf, wobei der Verpolschutz auch die Schutzvorrichtung der Zenerdiode ist. Es ist vorgesehen, dass eine aus der Zenerdiode und der gegenläufig gepolten Freilaufdiode bestehende Reihenschaltung der pulsweitenmodulierenden Motorsteuerung parallel geschaltet ist. Eine derartige Antriebsvorrichtung, lässt sich bei geringerem Raumbedarf realisieren, ermöglicht die Verwendung von Bauteilen mit geringeren Eigenschutzanforderungen (zum Beispiel gegen Überspannung), wodurch sich - neben der beschriebenen Einsparung mindestens eines Bauteils - die Teilekosten weiter vorteilhaft reduzieren lassen und ist vor Beschädigungen durch Überspannung und/oder eine Verpolung geschützt.

Wie zuvor beschrieben, muss der Funktionalbereich regelmäßig vor einer Verpolung der Versorgungsspannung geschützt werden und ist daher mit einem Verpolschutz versehen. Des Weiteren ist eine Zenerdiode vorhanden, die mindestens einen Teil des Funktionalbereichs vor einer Überspannung schützt, wobei die Zenerdiode von demselben genannten Verpolschutz vor einer Verpolung der Versorgungsspannung geschützt wird. Dadurch kann auf die zusätzliche, zum Schutz der Zenerdiode benötigte Leistungsdiode verzichtet werden, was in vorteilhafter Weise eine Reduzierung der Produktionskosten und eine Verringerung des benötigten Bauraums ermöglicht.

Mit Vorteil ist die Zenerdiode als Suppressordiode ausgeführt. Eine Suppressordiode ist eine Zenerdiode, die aufgrund ihrer besonderen Ausführungsform eine große Energiemenge aufnehmen kann, ohne dabei in ihrer Funktion beeinträchtigt zu werden. Daher kann eine Suppressordiode im Falle einer Überspannung in vorteilhafter Weise die Überspannung begrenzen, indem die überschüssige Energie von ihr verbraucht und/oder durchgeleitet wird.

Vorteilhafterweise ist der Funktionalbereich eine Motorsteuerelektronik, insbesondere zur Ansteuerung eines Motorkühlgebläses. Bei elektronischen Schaltungen mit einer hohen Stromaufnahme, wie zum Beispiel bei einem Motorkühlgebläse, muss im Überspannungsfall eine erhebliche Energie am Funktionalbereich vorbeigeführt und/oder außerhalb des Funktionalbereichs verbraucht werden. Dafür ist die genannte Schaltungsanordnung vorzugsweise geeignet.

Ein weiterer Vorteil ergibt sich, wenn der Funktionalbereich einen Elektrolytkondensator aufweist. Elektrolytkondensatoren werden in Schaltungen zur Speicherung von elektrischer Energie verwendet, zum Beispiel um eine Spannung zu stabilisieren. Aus Kostengründen ist man bemüht, die maximal erlaubte Spannung eines Elektrolytkondensators so niedrig wie möglich zu wählen, da eine erhöhte Spannungsfestigkeit unter anderem mit erhöhten Produktionskosten einhergeht. Gleichzeitig weisen Elektrolytkondensatoren eine geringe Toleranz gegenüber Überspannungen auf. Die Schaltungsanordnung ermöglicht es, einen kostengünstigen Elektrolytkondensator auszuwählen, und ihn mittels der erfindungsgemäßen Schaltungsanordnung vor einer Überspannung zu schützen.

Die Erfindung wird anhand einer Figur verdeutlicht, die das Schaltbild einer erfindungsgemäßen Antriebsvorrichtung zeigt.

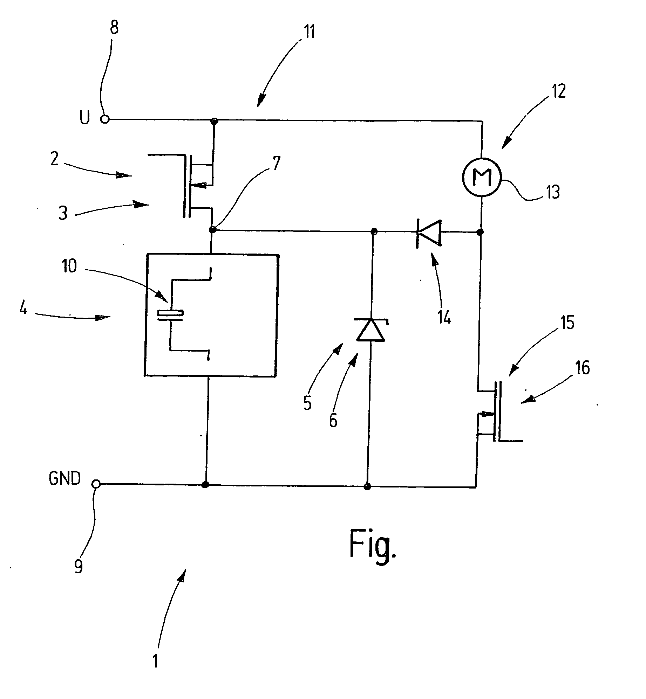

Die Figur zeigt eine Antriebsvorrichtung 1, die eine Schaltungsanordnung 11, einen Motor 12, der als Gebläsemotor 13 ausgeführt ist, eine Freilaufdiode 14 und eine Motorsteuerung 15 aufweist. Die Motorsteuerung 15 ist als Motorsteuerungstransistor 16 ausgeführt, der -von einer nicht näher dargestellten Schaltung angesteuert- den Gebläsemotor 13 pulsweitenmoduliert steuert. Die Antriebsvorrichtung 1 ist an die Versorgungsspannung U und an die Masse GND angeschlossen.

Die Schaltungsanordnung 11 wird nachfolgend erläutert: Am Eingang der Versorgungsspannung U weist die Schaltungsanordnung 11 einen Verpolschutz 2 auf, der als Feldeffekt-Transistor (FET) 3 ausgeführt ist. Die Ansteuerung des Gates des Feldeffekt-Transistors 3 führt zu einer nicht näher dargestellten Verpolschutzsteuerung, die auf verschiedene Arten realisiert werden kann (so zum Beispiel auch in den Funktionalbereich 4 integriert). Der Funktionalbereich 4 bewirkt das Ansteuern des Gebläsemotors 13 mittels einer nicht näher dargestellten Steuerleitung, sowie die Verarbeitung von Signalen oder das Ausführen von Regelfunktionen. Symbolisch ist dargestellt, dass der Funktionalbereich 4 einen Elektrolytkondensator 10 aufweist, der die Spannung am Eingang des Funktionalbereichs 4 stabilisiert. Dem Funktionalbereich 4 ist eine Zenerdiode 5 parallel geschaltet, die hier als Suppressordiode 6 ausgeführt ist.

Für den Fall einer ordnungsgemäßen Spannungsversorgung, fließt ein Strom von der Versorgungsspannung U durch den leitenden Verpolschutz 2 und durch den Funktionalbereich 4 zur Masse GND. Die Suppressordiode 6 übt in diesem Fall keine aktive Funktion aus. Gleichzeitig wird der Gebläsemotor 13 mit einer Betriebsspannung versorgt. Kommt es zu einer Spannungsüberhöhung der Versorgungsspannung U und wird dabei die Durchbruchsspannung der Suppressordiode 6 überschritten, so wird die Suppressordiode leitend und der durch den Verpolschutz 2 fließende Strom verzweigt sich am Knoten 7 in einen Teilfluss durch den Funktionalbereich 4 und in einen Teilfluss durch die Suppressordiode 6. In dieser Phase wird von der Suppressordiode 6 ausreichend Energie abgeleitet und/oder verbraucht, so dass weder der Funktionalbereich 4 noch der Motorsteuerungstransistor 16 geschädigt werden. (Für den Motorsteuerungstransistor 16 bedeutet dies zudem in vorteilhafterweise, dass er zur Kostenersparnis mit einer niedrigeren Sperrspannung ausgeführt werden kann.) Sinkt die Versorgungsspannung U wieder ab und unterschreitet dabei die Durchbruchsspannung der Suppressordiode 6, so sperrt die Suppressordiode 6 erneut und der am Knoten 7 auftretende Stromfluss führt wieder durch den Funktionalbereich 4.

Im Verpolfall, das heißt wenn an der Klemme 8 eine Masseanbindung vorliegt und an der Klemme 9 eine Versorgungsspannung anliegt, sperrt der Verpolschutz 2 und verhindert damit sowohl einen Stromfluss durch den Funktionalbereich 4 als auch durch die Suppressordiode 6. Da ein Stromfluss im Verpolfall -wie zuvor beschrieben- eine zerstörerische Wirkung haben kann, sind damit der Funktionalbereich 4 und die Suppressordiode 6 vor einer Beschädigung geschützt.

## Patentansprüche

1. Antriebsvorrichtung (1) für einen Gebläsemotor (13) eines Kraftfahrzeugs, mit einer pulsweitenmodulierenden Motorsteuerung (15), einer Freilaufdiode (14) und mit einer Schaltungsanordnung (11), aufweisend einen die Hauptfunktion der Schaltung bewirkenden Funktionalbereich (4), einen den Funktionalbereich (4) vor einer Verpolung der Versorgungsspannung (U) schützenden Verpolschutz (2), eine mindestens einen Teil des Funktionalbereichs (4) vor einer Überspannung schützende Zenerdiode (5) und eine die Zenerdiode (5) vor einer Verpolung der Versorgungsspannung (U) schützende Schutzvorrichtung, wobei der Verpolschutz (2) auch die Schutzvorrichtung der Zenerdiode (5) ist, **dadurch gekennzeichnet, dass** eine aus der Zenerdiode (5) und der gegenläufig gepolten Freilaufdiode (14) bestehende Reihenschaltung der pulsweitenmodulierenden Motorsteuerung (15) direkt parallel geschaltet ist.

2. Antriebsvorrichtung (1) nach Anspruch 1, **dadurch gekennzeichnet, dass** die Zenerdiode (5) als Suppressordiode (6) ausgeführt ist.

3. Antriebsvorrichtung (1) nach einem der vorhergehenden Ansprüche, **dadurch gekennzeichnet, dass** der Funktionalbereich (4) eine Motorsteuerelektronik, insbesondere für ein Motorkühlgebläse ist.

4. Antriebsvorrichtung (1) nach einem der vorhergehenden Ansprüche, **dadurch gekennzeichnet, dass** der Funktionalbereich (4) einen Elektrolytkondensator (10) aufweist.

## Claims

1. Drive apparatus (1) for a fan motor (13) of a motor vehicle, having a pulse-width-modulating motor controller (15), a freewheeling diode (14) and having a circuit arrangement (11), having a functional region (4), which implements the main function of the circuit, polarity reversal protection (2), which protects the functional region (4) from a polarity reversal of the supply voltage (U), a Zener diode (5), which protects at least part of the functional region (4) from an overvoltage, and a protective apparatus, which protects the Zener diode (5) from a polarity reversal of the supply voltage (U), the polarity reversal protection (2) also being the protective apparatus of the Zener diode (5), **characterized in that** a series circuit, which comprises the Zener diode (5) and the oppositely polarized freewheeling diode (14) is connected directly in parallel with the pulse-width-modulating motor controller (15).

2. Drive apparatus (1) according to Claim 1, **characterized in that** the Zener diode (5) is in the form of a suppressor diode (6).

3. Drive apparatus (1) according to one of the preceding claims, **characterized in that** the functional region (4) is motor control electronics, in particular for a motor cooling fan.

4. Drive apparatus (1) according to one of the preceding claims, **characterized in that** the functional region (4) has an electrolyte capacitor (10).

## Revendications

1. Dispositif d'entraînement (1) d'un moteur de ventilateur (13) d'un véhicule automobile comportant une commande de moteur (15) à modulation de largeur d'impulsion, une diode de roue libre (14) et un circuit (11) ayant une zone fonctionnelle (14) assurant la fonction principale du circuit, une zone fonctionnelle (4) avant une protection de polarité protégeant la polarité de la tension d'alimentation (U), au moins une partie de la zone fonctionnelle (4) se trouvant avant une diode Zener (5) protégeant contre une surtension et un dispositif de protection protégeant la diode Zener (5) contre une erreur de polarité de la tension d'alimentation (U),
le dispositif de protection de la diode Zener (5), étant également la protection contre la polarité (2),
**caractérisé en ce que**
le montage en série composé de la diode Zener (5) et de la diode de roue libre (14) à polarité opposée, est branché directement en parallèle sur la commande de moteur à modulation de largeur d'impulsion (15).

2. Dispositif d'entraînement (1) selon la revendication 1,
**caractérisé en ce que**
la diode Zener (5) est une diode de suppression (6).

3. Dispositif d'entraînement (1) selon l'une des revendications précédentes,
**caractérisé en ce que**
la zone fonctionnelle (4) est l'électronique de commande du moteur, notamment du ventilateur de refroidissement du moteur.

4. Dispositif d'entraînement (1) selon l'une des revendications précédentes,
**caractérisé en ce que**
la zone fonctionnelle (4) comporte un condensateur à électrolyte (10).
